# EUROPEAN PATENT SPECIFICATION

(11) **EP 3 677 824 B1**
(45) Date of publication and mention of the grant of the patent: **07.06.2023**
(21) Application number: 19840167.1
(22) Date of filing: 15.03.2019
(51) Int. Cl.: F16L 21/03, F16L 37/091, F16L 37/092

(54) **PIPE CONNECTOR STRUCTURE**
ROHRVERBINDUNGSSTRUKTUR
STRUCTURE DE RACCORD DE TUYAU

(30) Priority: 23.07.2018 CN 201810812033; 23.01.2019 CN 201920113972 U
(43) Date of publication of application: 08.07.2020
(73) Proprietor: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528000 (CN)
(72) Inventor: LI, Ximin, Foshan, Guangdong 528100 (CN); LIN, Xiyong, Foshan, Guangdong 528100 (CN); DIAO, Zhenbin, Foshan, Guangdong 528100 (CN); CAO, Huijian, Foshan, Guangdong 528100 (CN); CHENG, Jiajia, Foshan, Guangdong 528100 (CN); CHEN, Ali, Foshan, Guangdong 528100 (CN); CHEN, Wenfeng, Foshan, Guangdong 528100 (CN); LI, Xin, Foshan, Guangdong 528100 (CN)
(74) Representative: Petraz, Gilberto Luigi
(86) International application number: PCT/CN2019/078365
(87) International publication number: WO 2020/019732

(56) References cited:
- EP-A1- 2 949 984
- WO-A1-2014/061387
- CN-A- 1 295 210
- CN-A- 1 295 210
- CN-A- 1 295 210
- CN-A- 104 662 351
- CN-A- 108 716 577
- CN-U- 205 402 042
- CN-U- 206 723 646
- CN-U- 207 334 029
- JP-A- 2013 036 542
- JP-A- 2016 109 170
- JP-A- 2016 109 170
- US-A1- 2005 035 597

## Description

### TECHNICAL FIELD

The present disclosure relates to a pipe connecting technology, and more particularly, to a pipe joint structure.

### BACKGROUND

Currently, pipe joints usually employ clamp-pressing structures and nut-engaging structures. However, a clamp-pressing joint requires a special pressing tong for installation, resulting in time consuming and labor intensive. And a nut-engaging joint requires a wrench to tighten the nut for installation, resulting in more time consuming and labor intensive.

How to achieve quick installation and removal, easy maintenance and good sealing performance between pipes has become the constant pursuit of the technicians in pipe industry. If the clamp-pressing joint is not pressed into place when installing, the sealing performance of the pipe cannot be ensured. Furthermore, when a leak occurs in the clamp-pressing joint, it must be repaired by cutting from the pipe since the clamp-pressing joint is not detachable, so that the joint cannot be reused. In the nut-engaging joint, if the pipe is not inserted into place or the nut is not tightened, the sealing performance of the pipe also cannot be ensured, the nut tends to loosening after a period of use, and the sealing performance of the pipe will be greatly affected.

In addition, for a traditional pipe connection procedure, an end port of the pipe must be chamfered before being inserted, and the cut of the pipe cannot be tilted, otherwise it will easily lead to damage of a sealing ring in the connecting pipe by squeezing the same or push the sealing ring out from a sealing ring slot, therefore affecting the sealing performance of the connected pipes. In actual use, leak events due to an installation worker's forgetting to chamfer the end port of the pipe or due to an unqualified pipe cutting often happen, resulting in loss.

US2005/0035597A1 discloses a quick-action coupling for pipes. The quick-action coupling includes a tubular inner part; an inner sleeve and a clamping ring, each surrounding at least a portion of the tubular inner part; a toothed ring between the inner sleeve and the clamping ring; and an outer sleeve surrounding at least a portion of the inner sleeve, the toothed ring, and the clamping ring. The outer sleeve comprises a cylindrical region having at least two inside diameters and a conical region, and the clamping ring is received in the conical region.

CN1295210A discloses a pipe joint. The pipe joint has a joint body with a cylindrical guiding portion, a slot for mounting sealing member is formed on an outer peripheral surface of the guiding portion, and a guiding ring is sleeved on the outer peripheral surface of the guiding portion. The guiding ring is sandwiched between the outer circumferential surface of the guiding portion and an inner circumferential surface of a pipe when the pipe is inserted, thereby sliding on the guiding portion and uniformly pressing the sealing member. The guiding ring consists of a cylindrical portion sleeved on the guiding portion and a flange portion for abutting against a front end of the pipe.

### SUMMARY

Based on the above, it is necessary to provide a pipe joint structure that can achieve effective connection between pipes without using externally installing tools, such as a pressing tong, a wrench and the like.

A pipe joint structure, comprises:
a joint body;
a support seat, wherein a first end of the support seat is sleeved on the outside of the joint body, a second end of the support seat is disposed to be separated from the joint body, and an accommodating cavity is defined between an inner wall of the support seat and an outer wall of the joint body;
a housing, wherein a first end of the housing is sleeved on the outside of the support seat and engaged with the support seat, a second end of the housing is disposed beyond the second end of the support seat, so that a contraction cavity is defined between an inner wall of the housing and the outer wall of the joint body; an insertion opening through which a pipe can be inserted is defined between the joint body and the second end of the housing, the insertion opening communicates with the accommodating cavity via the contraction cavity, an end of the contraction cavity close to the insertion opening is a small opening end, and the other end of the contraction cavity away from the insertion opening is a large opening end; and
an elastic member, sleeved on the outside of the joint body and disposed in the contraction cavity; wherein a passage through which the pipe can pass is defined between the elastic member and the joint body.

When assembling the above pipe joint structure, the support seat is sleeved on the joint body, so that the first end of the support seat is connected with the joint body, and the inner wall of the support seat and the outer wall of the joint body together define the accommodating cavity having an opening end. Then, the elastic member is sleeved on the joint body, making the elastic member disposed outside the second end of the support seat, and a passage is defined between the inner wall of the elastic member and the outer wall of the joint body. Then the first end of the housing is sleeved on the support seat and engaged with the support seat, the second end of the housing is separated from the joint body, and the contraction cavity is defined between the inner wall of the housing and the outer wall of the joint body so that the elastic member is disposed inside the contraction cavity. In the process of assembling the pipe joint structure, effective connections between its various components can be achieved without using externally installing tools. In use, the pipe to be connected is inserted into the contraction cavity and the accommodating cavity through the insertion opening, so that the elastic member can be sleeved on the outside of the pipe. Since the size of the contraction cavity decreases toward the insertion opening, the pipe will drive the elastic member to move toward the insertion opening when the pipe is pulled outward, and the pressure force applied to the elastic member by the inner wall of the housing forming the contraction cavity gradually increases. Therefore, the further the pipe is pulled out, the greater pressure force is applied to the pipe by the elastic member and the joint body, thereby preventing the pipe from detaching from the pipe joint structure and achieving a reliable connection to the pipe. The above pipe joint structure itself is simple to assemble, meanwhile, in actual use, the connection operation between the pipe joint structure and the pipe is also simple, because it only needs to insert the pipe through the insertion opening.

An outer wall of the support seat is provided with a plurality of engagement grooves and guiding grooves, the engagement grooves are spaced apart along a circumferential direction of the support seat, the guiding grooves communicate with the engagement grooves respectively, and a side of each of the guiding grooves away from each of the engagement grooves penetrates through an end surface of the second end of the support seat; and a wall of the housing is provided with a plurality of engagement plates that are capable of engaging with the engagement grooves through the guiding grooves.

In one embodiment, a circumferential span of the guiding groove gradually increases in a direction in which the pipe is pulled out; and/or, a radial depth of the engagement groove gradually increases in the direction in which the pipe is pulled out.

In one embodiment, the support seat is provided with a first peephole, and the first peephole communicates with the accommodating cavity; the first peephole is disposed between the engagement groove and the first end of the support seat; the housing is provided with a second peephole, and the second peephole communicates with the first peephole.

In one embodiment, the first end of the support seat is provided with an engagement step, the joint body is provided with a fixing groove, and the engagement step is locked in the fixing groove.

In one embodiment, the joint body is provided with a first convex ring and a second convex ring spaced apart from the first convex ring, the second convex ring is further away from the elastic member than the first convex ring; the first convex ring, the second convex ring and the joint body together define the fixing groove, and an outer wall of the first convex ring is provided with a first frustoconical guiding surface to facilitate the insertion of the support seat.

In one embodiment, an outer wall of the elastic member is provided with a frustoconical surface; the elastic member is an annular member with a gap, and an axial length of the elastic member is smaller than an axial length of the contraction cavity.

In one embodiment, an outer wall of the elastic member is provided with a frustoconical surface; the elastic member is an annular structure with one or more notches, and an axial length of the elastic member is smaller than an axial length of the contraction cavity.

In one embodiment, an inner wall of the elastic member is provided with a first engagement tooth, and a surface of the first engagement tooth is provided with a second frustoconical guiding surface to facilitate the insertion of the pipe.

In one embodiment, the outer wall of the joint body is provided with a plurality of anti-off teeth, the anti-off teeth are sequentially arranged in an axial direction between an end of the joint body and the first convex ring adjacent thereto.

In one embodiment, the outer wall of the joint body is provided with at least one sealing ring slot, the sealing ring slot is disposed between an end of the joint body and the first convex ring adjacent thereto.

In one embodiment, the pipe joint structure further includes an elastic claw ring, the elastic claw ring is sleeved on the outside of the joint body, and the elastic claw ring is disposed between the support seat and the elastic member.

In one embodiment, the elastic claw ring includes a ring body and a plurality of second engagement teeth, the second engagement teeth are arranged at inside of the ring body with intervals, and the second engagement teeth are extended obliquely from the contraction cavity toward the accommodating cavity; an inner wall of the second end of the support seat is provided with a flared inner conical surface.

In one embodiment, the outer wall of the joint body is provided with a sealing ring slot; and the pipe joint structure comprises a housing assembly comprising the support seat, the housing and the elastic member, and a receiving cavity is defined between an inner wall of the housing assembly and the outer wall of the joint body; the accommodating cavity is a portion of the receiving cavity, and the contraction cavity partially overlaps with the receiving cavity;
the pipe joint structure also comprises a guiding ring, disposed inside the receiving cavity and being axially movable; wherein the guiding ring includes a ring portion and an annular pressing portion, the ring portion is sleeved on the outside of the joint body, the pressing portion is disposed at an end of the ring portion away from the insertion opening, and the pressing portion is adapted to abut against an end port of the pipe.

In one embodiment, a sealing ring is mounted in the sealing ring slot, an inner diameter of the ring portion is smaller than an outer diameter of the sealing ring; an outer diameter of the ring portion is not greater than an inner diameter of the pipe.

In one embodiment, an outer diameter of the pressing portion is not greater than an outer diameter of the pipe.

In one embodiment, an inner wall of the pressing portion is provided with a inclined guiding wall.

In one embodiment, the joint body is provided with a first positioning groove for engaging the guiding ring, the first positioning groove is disposed between the sealing ring slot and an end of the joint body, and a side wall of the first positioning groove away from the insertion opening is in a frustoconical shape to cooperate with the inclined guiding wall.

In one embodiment, an outer wall of the joint body corresponding to a bottom of the receiving cavity is provided with a stop portion to cooperate with the inclined guiding wall.

In one embodiment, the housing assembly is provided with a peephole for observing a mating position of the pipe.

In one embodiment, the housing assembly comprises:
a support seat, wherein a first end of the support seat is sleeved on the outside of the joint body, a second end of the support seat is disposed to be separated from the joint body; an accommodating cavity is defined between an inner wall of the support seat and an outer wall of the joint body, and the accommodating cavity is a portion of the receiving cavity;
a housing, wherein a first end of the housing is sleeved on the outside of the support seat and engaged with the support seat, a second end of the housing is disposed beyond the second end of the support seat, so that a contraction cavity is defined between an inner wall of the housing and the outer wall of the joint body, and the contraction cavity partially overlaps with the receiving cavity; an insertion opening through which a pipe can be inserted is defined between the joint body and the second end of the housing, the insertion opening communicates with the accommodating cavity via the contraction cavity, an end of the contraction cavity close to the insertion opening is a small opening end, and the other end of the contraction cavity away from the insertion opening is a large opening end; and
an elastic member, sleeved on the outside of the joint body and disposed in the contraction cavity; wherein a passage through which the pipe can pass is defined between the elastic member and the joint body.

In one embodiment, an outer wall of the support seat is provided with an engagement groove, a wall of the housing is provided with an engagement plate, and the engagement plate is capable of engaging in the engagement groove; the outer wall of the support seat is further provided with a guiding groove, the guiding groove communicates with the engagement groove, and a side of the guiding groove away from the engagement groove penetrates through an end surface of the second end of the support seat.

In one embodiment, the first end of the support seat is provided with an engagement step, the joint body is provided with a fixing groove, and the engagement step is locked in the fixing groove.

In one embodiment, an outer wall of the elastic member is provided with a frustoconical surface; the elastic member is an annular member with a gap, and an axial length of the elastic member is smaller than an axial length of the contraction cavity;
or, an outer wall of the elastic member is provided with a frustoconical surface; the elastic member is an annular structure with one or more notches, and an axial length of the elastic member is smaller than an axial length of the contraction cavity.

In one embodiment, an inner wall of the elastic member is provided with a first engagement tooth, and a surface of the first engagement tooth is provided with a second frustoconical guiding surface to facilitate the insertion of the pipe.

In one embodiment, the pipe joint structure further includes an elastic claw ring, the elastic claw ring is sleeved on the outside of the joint body, and the elastic claw ring is disposed between the support seat and the elastic member; the elastic claw ring includes a ring body and a plurality of second engagement teeth, the second engagement teeth are arranged at inside of the ring body with intervals, and the second engagement teeth are extended obliquely from the contraction cavity toward the accommodating cavity; and an inner wall of the second end of the support seat is provided with a flared inner conical surface.

### BRIEF DESCRIPTION OF THE DRAWINGS

Fig. 1 is a partial sectional view of a pipe joint structure according to a first embodiment of the present disclosure.
Fig. 2 is a sectional view of a joint body in Fig. 1.
Fig. 3 is a schematic structural view showing a support seat in Fig. 1.
Fig. 4 is a sectional view of the support seat shown in Fig. 3.
Fig. 5 is a schematic structural view showing a housing in Fig. 1.
Fig. 6 is a sectional view of the housing shown in Fig. 5.
Fig. 7 is a schematic structural view showing an elastic member in Fig. 1.
Fig. 8 is a schematic structural view showing another elastic member.
Fig. 9 is a schematic structural view showing an elastic claw ring in Fig. 1.
Fig. 10 is a schematic structural view showing the installation of the pipe joint structure shown in Fig. 1 and a pipe.
Fig. 11 is an enlarged view of a portion A in Fig. 10.
Fig. 12 is a schematic structural view showing pulling the pipe of the installation of the pipe joint structure and the pipe shown in Fig. 10.
Fig. 13 is an enlarged view of a portion B in Fig. 12.
Fig. 14 is a partial sectional view of a pipe joint structure according to a second embodiment of the present disclosure.
Fig. 15 shows a using state of the pipe joint structure in Fig. 14.
Fig. 16 shows another using state of the pipe joint structure in Fig. 14.
Fig. 17 is a schematic structural view showing a guiding ring in Fig. 14.
Fig. 18 is a schematic structural view showing a joint body in Fig. 14.
Fig. 19 is a schematic structural view showing a support seat in Fig. 14.
Fig. 20 is a schematic structural view showing a housing in Fig. 14.
Fig. 21 is a schematic structural view showing an elastic member in Fig. 14.
Fig. 22 is a schematic structural view showing an elastic claw ring in Fig. 14.

### DETAILED DESCRIPTION

In order to facilitate the understanding of the present disclosure, the present disclosure is described more fully hereinafter with reference to the accompanying drawings. The preferred embodiments of the present disclosure are shown in the accompanying drawings. The various embodiments of the present disclosure may, however, be embodied in many different forms and should not be construed as limited to the embodiments set forth herein. Rather, these embodiments are provided so that the present disclosure will be more thoroughly and completely understood.

It should be noted that when an element is referred to as being "fastened" (or "fixed", "secured" and the like) to another element, it may be directly on another element or an intermediate element may be present. When an element is referred to as being "connected" to another element, it may be directly connected to another element or an intermediate element may be present. Rather, when an element is referred to as being "directly on" another element, there is no intermediate element. The terms "vertical", "horizontal", "left", "right" and the like, as used herein, are used for purposes of illustration only and do not represent exclusive embodiment.

All technical and scientific terms used herein have the same meaning as commonly understood by one of ordinary skill in the art to which this disclosure belongs, unless otherwise defined. The term "and/or" used herein includes any and all combinations of one or more of the associated listed items.

### The First Embodiment

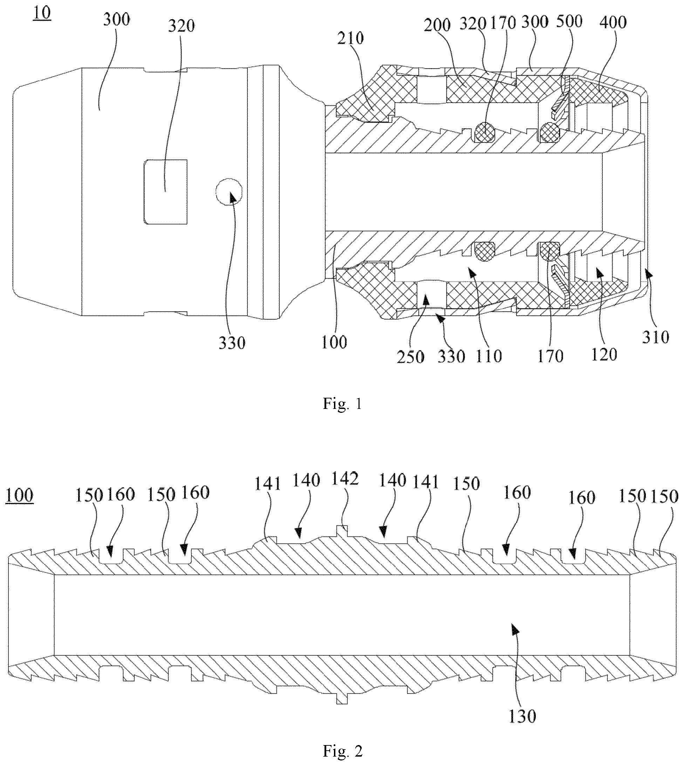

A pipe joint structure 10 according to a first embodiment of the present disclosure is shown in Figs. 1 to 13. Referring to Fig. 1, the pipe joint structure 10 in an embodiment is used in a pipe connection. During assembly or use, the assembly of the pipe joint structure 10 and its connection with the pipe can be achieved without using externally installing tools such as a pressing tong, awrench, and the operations of assembly and use are convenient and simple. Specifically, the pipe joint structure 10 includes a joint body 100, a support seat 200, a housing 300, and an elastic member 400.

The support seat 200 is sleeved on the joint body 100, a first end of the support seat 200 is connected to the joint body 100, a second end of the support seat is separated from the joint body 100. An accommodating cavity 110 is defined between an inner wall of the support seat 200 and an outer wall of the joint body 100. The accommodating cavity 110 is adapted to mate with a pipe to be connected tightly. A first end of the housing 300 is sleeved on the support seat 200 and engaged with the support seat 200, a second end of the housing 300 is disposed beyond the second end of the support seat 200 (i.e., the second end of the housing 300 protrudes beyond the second end of the support seat 200), and a contraction cavity 120 is defined between the housing 300 and the outer wall of the joint body 100. An insertion opening 310 is defined between the joint body 100 and an end port of the second end of the housing 300, and the insertion opening 310 communicates with the accommodating cavity 110 via the contraction cavity 120. The contraction cavity 120 is substantially a contraction type annular cavity which has a large diameter of an end port of the first end and a small diameter of an end port of the second end, the second end of the contraction cavity 120 is close to the insertion opening 310, and the first end of the contraction cavity 120 is away from the insertion opening 310. In this embodiment, Changes in the diameter of the end ports of the contraction cavity 120 is mainly achieved by changes in the diameter of the inner wall of the housing 300 forming the contraction cavity 120. The elastic member 400 is sleeved on the joint body 100 and disposed in the contraction cavity 120, and a passage for the pipe to pass therethrough is defined between an inner wall of the elastic member 400 and the outer wall of the joint body 100. Preferably, in the embodiment shown in Fig. 1, an axial length of the elastic member 400 is less than an axial length of the contraction cavity 120.

When assembling the above pipe joint 10, sleeving the support seat 200 on the joint body 100, so that the first end of the support seat 200 is connected with the joint body 100, and the inner wall of the support seat 200 and the outer wall of the joint body 100 together define the accommodating cavity 110 having an opening end. Then, sleeving the elastic member 400 on the joint body 100, making the elastic member 400 disposed outside the second end of the support seat 200, and then a passage is defined between the inner wall of the elastic member 400 and the outer wall of the joint body 100. Next, sleeving the first end of the housing 300 on the support seat 200, making the first end of the housing 300 engaged with the support seat 200. The second end of the housing 300 is separated from the joint body 100, and the contraction cavity 120 is defined between the inner wall of the housing 300 and the outer wall of the joint body 100, and the elastic member 400 is disposed inside the contraction cavity 120. In the process of assembling the pipe joint structure 10, effective connections between its various components can be achieved without using externally installing tools.

In use, inserting the pipe to be connected into the insertion opening 310 and further into the contraction cavity 120 and the accommodating cavity 110, so that the elastic member 400 can be sleeved on the outside of the pipe. Since the size of the contraction cavity 120 decreases toward the insertion opening 310, the pipe will drive the elastic member 400 to move toward the insertion opening 310 when the pipe is pulled outward, and the pressure force applied to the elastic member 400 by the inner wall of the housing forming the contraction cavity 120 gradually increases. Therefore, the further the pipe is pulled out, the greater pressure force is applied to the pipe by the elastic member 400 and the joint body 100 (in Fig. 1, the elastic member 400 will hold the pipe tightly when the pipe is pulled out), thereby preventing the pipe from detaching from the pipe joint structure 10. The above pipe joint structure 10 itself is simple to assemble, meanwhile, in actual use, the connection operation between the pipe joint structure 10 and the pipe is also simple, because it only needs to insert the pipe through the insertion opening 310.

Referring to Fig. 2, specifically, the joint body 100 is provided with a through hole 120 extending along a center line, and the through hole 130 penetrates through two opposite ends of the joint body 100. There are two support seats 200, and the two support seat 200 are sleeved on the outside of the joint body 100 from the two opposite ends of the joint body 100, respectively. Each of the support seats 200 corresponds to a housing 300 and an elastic member 400, respectively. In use, one pipe can be sleeved on one end of the pipe body 100, another pipe can be sleeved on the other end of the joint body 100, achieving a convenient connection between two pipes. Of course, in other embodiments, the joint body 100 may not be provided with a through hole but a blind hole, or the joint body 100 is a solid structure without a hole. In use, the pipe can be blocked by inserting the joint body 100 into the pipe to be connected, and a plug is formed.

In this embodiment, specifically, the joint body 100 is a through joint, the through hole 130 is an axial hole, and the two support seats are opposite to each other. Of course, in another embodiment, the joint body 100 also can be configured to an elbow joint, a three-way j oint or other types of joints according to actual needs.

Preferably, the outer wall of the joint body 100 is provided with a fixing groove 140, the first end of the support seat 200 is provided with an engagement step 210, and the engagement step 210 is locked in the fixing groove 140. The accommodating cavity 110 is defined between the inner wall of the support seat 200 and an outer wall of the joint body 100. The engagement between the support seat 200 and joint body 100 is achieved by the engagement between the fixing groove 140 and the engagement step 210, and thus there is no need for using externally installing tools. Preferably, in this embodiment, the support seat 200 can be made of an elastic material, a surface of the engagement step 210 is provided with a frustoconical guiding surface (not labeled) to guide the engagement step 210 passing over an outer convex structure of the outer wall of the j oint body 100, so that the engagement step 210 is smoothly mounted into the fixing groove 140.

Of course, in other embodiments, the joint body 100 can also be provided with external threads, an inner wall of the first end of the support seat 200 is provided with internal threads, the external threads engage with the internal threads, so that the support seat 200 is fixed to the joint body 100. In another embodiment, the first end of the support seat 200 can be fixed to the joint body 100 via a clamp. There are many ways to connect the support seat 200 with the joint body 100 as long as the first end of the support seat 200 can be fixed to the joint body 100.

Preferably, the outer wall of the joint body 100 is provided with a first convex ring 141 and a second convex ring 142 spaced apart from the first convex ring 141. The first convex ring 141, together with the second convex ring 142 and the j oint body 100, enclose the fixing groove 140. The second convex ring 142 is further away from a corresponding elastic member 400 than a corresponding first convex ring 141. an outer wall of the first convex ring 141 is provided with a first frustoconical guiding surface, a diameter of the first frustoconical guiding surface gradually decreases in the direction toward the elastic member 400. When assembling, the first end of the support seat 200 passes through the first convex ring 141, and under the guidance of the first frustoconical guiding surface of the first convex ring 141, it is more easily engage into a place between the first convex ring 141 and the second convex ring 142, thereby facilitating the engagement step 210 of the support seat 200 to be locked in the fixing groove 140.

Specifically, in this embodiment, the joint body 100 is a symmetric structure with respect to the second convex ring 142, two opposite sides of the second convex ring 142 are respectively provided with the first convex ring 141, defining the fixing groove 140 respectively. Of course, in other embodiment, it is possible to provide the first convex ring 141 only on one side of the second convex ring 142.

Further, the outer wall of the joint body 100 is provided with a plurality of anti-off teeth 150, the anti-off teeth 150 are sequentially arranged in an axial direction between an end of the j oint body 100 and the first convex ring 141 adjacent thereto. The anti-off teeth 150 can abut against an inner wall of the pipe when the pipe is inserted into the accommodating cavity 110 and the contraction cavity 120, thereby increasing the friction between the pipe and the joint body 100, and further preventing the pipe from falling off. Furthermore, the maximum diameters of all anti-off teeth 150 are substantially equal.

Preferably, at least one sealing ring slot 160 is defined between the end of the joint body 100 and the adjacent one of the first convex ring 141, the sealing ring slot 160 is used for receiving a sealing ring 170 for sealing the pipe and the joint body 100. Specifically, in this embodiment, there are two sealing ring slots 160 which are spaced apart, each sealing ring slot 160 is provided with a sealing ring 170, thereby strengthening the seal performance between the pipe and the joint body 100 and preventing liquid in the pipe from flowing out between the pipe and the joint body 100. Of course, in other embodiment, the number of the sealing ring 170 can be one, two, or others.

Preferably, the j oint body 100 may be made of metal or plastic so that the j oint body 100 has a certain strength.

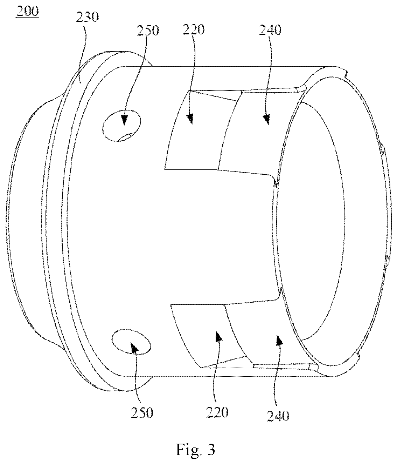

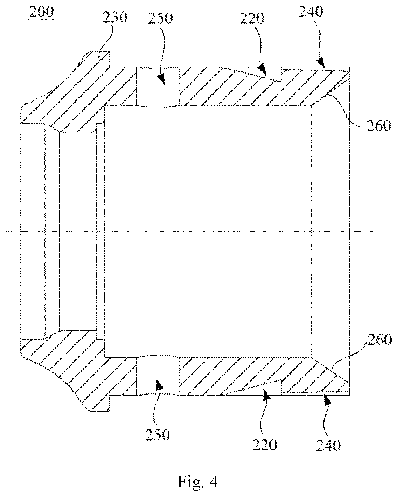

Referring to Figs. 3 and 4, the first end of the support seat 200 is engaged with the joint body 100. Specifically, an inner diameter of the first end of the support seat 200 increases in a direction toward an end surface of the first end of the support seat 200, which contribute to the engagement step 210 of the support seat 200 being locked in a place between the first convex ring 141 and the second convex ring 142 of the joint body 100. Further, a minimum inner diameter of the first end of the support seat 200 is smaller than a maximum outer diameter of the first convex ring 141 and a maximum outer diameter of the second convex ring 142 to form the engagement step 210, so that the engagement step 210 can be effectively locked in the fixing groove 140 defined by the first convex ring 141 and the second convex ring 142, and the support seat 200 is effectively engaged with the joint body 100.

Specifically, in this embodiment, the support seat may be injection molded from a plastic such as PPSU (Polyphenylene sulfone resins) with higher intensity or high temperature nylon, which can reduce manufacturing process of the support seat 200 and reduce cost. Meanwhile, the support seat 200 has a certain elasticity, so that the engagement step 210 can easily pass through the first convex ring 141 and be locked in the fixing groove 140. Preferably, the support seat 200 is substantially a hollow cylindrical. Of course, in other embodiments, the support seat 200 may also be made of a metal material.

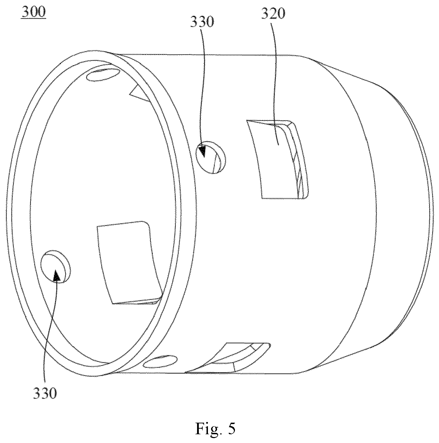

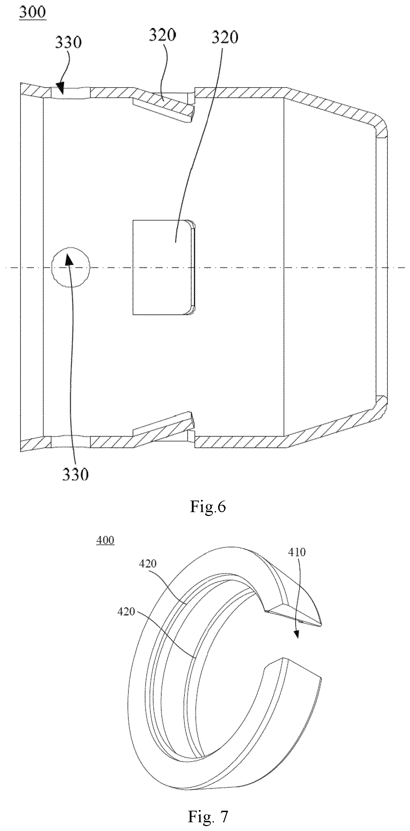

Referring to Figs. 5 and 6, the outer wall of the support seat 200 is provided with an engagement groove 220, a wall of the housing 300 is provided with an engagement plate 320, and the engagement plate 320 is capable of engaging in the engagement groove 220. The supporting seat 200 can be engaged with the housing 300 without using an externally connecting member or a locking member by the cooperation of the engagement plate 320 and the engagement groove 220, thereby achieving a stable assembly of the support seat 200 and the housing 300.

The housing 300 is moved from the second end of the support seat 200 toward the first end of the support seat 200 to be sleeved on the support seat 200, and making the engagement plate 320 locked in the engagement groove 220. Preferably, a radial depth of the engagement groove 220 gradually increases in a direction in which the pipe is pulled out (consistent with a movement direction from the first end of the support seat 200 toward the second end of the support seat 200, opposite to a direction in which the pipe is inserted). The structure of the engagement groove 220 can effectively prevent the engagement plate 320 from being detached from the engagement groove 220 and prevent the housing 300 from being detached from the support seat 200.

Specifically, in this embodiment, there are a plurality of engagement grooves 220, and the engagement grooves 220 are spaced apart along a circumferential direction of the support seat 200. The number of the engagement plates 320 corresponds to the number of the engagement grooves 220, each engagement groove 220 corresponds to an engagement plate 320, The engagement between the housing 30 and the support seat 200 is more effective by the cooperation of the engagement grooves 220 and the engagement plates 320, thereby preventing the housing 300 from moving relative to the support seat 200. Preferably, in this embodiment, the number of the engagement grooves 220 is four, the four engagement grooves 220 are evenly disposed along the circumferential direction of the support seat 200. The number of the engagement plates 320 is four, and each engagement groove 220 corresponds to one engagement plate 320.

Preferably, the outer wall of the support seat 200 is provided with a stopping ring 230, the stopping ring 230 is disposed between the engagement grooves 220 and the end surface of the first end of the support seat 200. The first end of the housing 300 can abut against the stopping ring 230 when the housing 300 is sleeved on the support seat 200, meanwhile, the engagement plates 320 are engaged within the engagement grooves 220, so that the housing 300 is effectively fixed on the support seat 200, thereby effectively preventing the housing 300 from being detached from the support seat 200 or moving relative to the support seat 200.

The outer wall of the support seat 200 is further provided with a guiding groove 240, the guiding groove 240 communicates with the engagement groove 220, and a side of the guiding groove 240 away from the engagement groove 220 penetrates through an end surface of the second end of the support seat 200. The arrangement of the guiding groove 240 will facilitate the alignment between the housing 300 and the support seat 200 when assembling, so that the engagement plate 320 can slide into the engagement groove 220 along the guiding groove 240, thereby further facilitating the assembly of the housing 300.

Preferably, a circumferential span of the guiding groove 240 gradually increases in a direction in which the pipe is inserted. The engagement plate 320 of the support seat 300 is restrained by two opposite side walls of the guiding groove 240, so that the engagement plate 320 can be effectively inserted into the engagement groove 220 along the guiding groove 240, further improving the efficiency of positioning and assembling the housing 300 on the support seat 200, and the assembly efficiency of the support seat 200 and the housing 300 is greatly improved.

The support seat 200 is provided with a first peephole 250, and the first peephole 250 communicates with the accommodating cavity110, and the first peephole 250 is disposed between the engagement groove 220 and the end surface of the first end of the support seat for checking an assembly length of the pipe. Preferably, the housing 300 is provided with a second peephole 330, the first peephole 250 corresponds to the second peephole 330 and communicates with the second peephole 330. Then, the first peephole 250 is preferably defined between the stopping ring 230 and the engagement groove 220, which facilitates the arrangement of the first peephole 250 and the second peephole 330. The first peephole 250 and the second peephole 330 can be used to observe whether the pipe is effectively inserted into the accommodating cavity 110, and it is advantageous to ensure that the length of the pipe into the accommodating cavity 110 is long enough, so as to avoid an unstable connection between the pipe and the pipe joint structure 10 due to the pipe not protruding into the accommodating cavity 110 a predetermined length.

Specifically, in this embodiment, the number of the first peephole 250 is preferably four, four first peepholes 250 are spaced apart along the circumferential direction of the support seat 200. The number, the position of the second peephole 330 correspond to the number, the position of the first peephole 250. Of course, in other embodiments, the number of the first peephole 250 and the number of the second peephole 330 may be one, two, or others, as long as the insertion depth of the pipe into the accommodating cavity 110 can be observed.

Of course, in other embodiments, the first peephole 250 can be defined between the stopping ring 230 and the end surface of the first end of the support seat200, and the first peephole 250 communicates with the accommodating cavity 110. Then, the second peephole 330 may be omitted from the housing 300.

Referring to Figs. 5 and 6, the engagement plate 320 is provided on a side wall of the housing 300, and preferably the engagement plate 320 is a movable elastic sheet extending inwardly from the side wall of the housing 300. Preferably, the engagement plate 320 is formed by cutting the side wall of the housing 300, and a side edge of the engagement plate 320 close to the second peephole 330 is fixed to the housing 300. The other side edges of the engagement plate 320 are cut off from the housing 300 and lifted up into the housing 300. Of course, in other embodiments, the engagement plate 320 may also be formed by stamping the side wall of the housing 300 inward.

Specifically, in this embodiment, the engagement plate 320 is in a square shape. Of course, in other embodiments, the engagement plate 320 can be in a polygonal shape, an arc shape, or other irregular shape, as long as it can be effectively inserted into the engagement groove 220.

Specifically, an inner diameter of the second end of the housing 300 gradually decreases in a direction in which the pipe is pulled out, so that the contraction cavity 120 can be effectively defined between the inner wall of the housing 300 and the outer wall of the joint body 100.

Specifically, in this embodiment, the housing 300 is made of stainless steel or other metal having better strength and elasticity. By providing the housing 300, the structural strength of the pipe joint structure 10 can be further enhanced, and the support seat 200 can be protected from being damaged. Meanwhile, the wall thickness of the housing 300 can be reduced because the housing is made of metal, thereby effectively saving assembly space. Of course, in other embodiments, the housing 300 can also be made of plastic or other materials having better strength and elasticity.

Referring to the Fig. 7, the elastic member 400 is sleeved on the joint body 100 and disposed inside the contraction cavity 120. The pipe can be effectively fixed in the contraction cavity 120 by means of the elastic member 400, thereby preventing the pipe from being detached from the pipe joint structure 10. Specifically, an outer diameter of the elastic member 400 gradually increases in the direction in which the pipe is inserted. Preferably, an outer wall of the elastic member 400 is provided with a frustoconical surface. An axial length of the elastic member 400 is smaller than an axial length of the contraction cavity 120, so that an axial movement space is provided for the elastic member 400 in the contraction cavity 120, and the elastic member 400 can be moved along with the pipe being inserted into or pulled out.

Preferably, the elastic member 400 is in an annular shape with a gap 410, so that the elastic member 400 has a large amount of contraction. In a free state, an inner diameter of the elastic member 400 is slightly smaller than an outer diameter of the pipe. Therefore, the elastic member 400 can be tightly sleeved on the pipe when the pipe is inserted into the contraction cavity 120, so that the elastic member 400 can effectively hold the pipe in the contraction cavity 120. When the pipe is pulled outward, the elastic member 400 moves outward with the pipe. Based on the shape of the contraction cavity 120, the elastic member 400 is pressed, and the gap 410 of the elastic member 400 becomes smaller and the elastic member 400 holds the pipe more tightly, thereby preventing the pipe from being accidentally pulled out. Of course, in other embodiments, the elastic member 400 may be in a complete annular shape and have a certain elasticity.

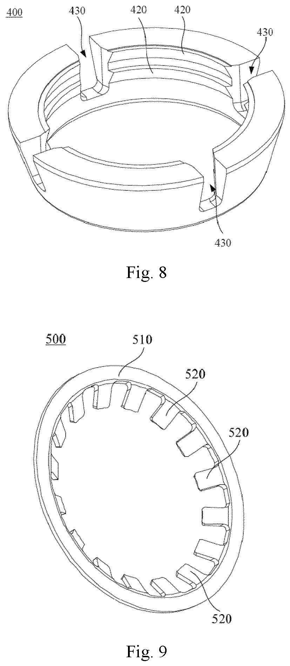

Referring to Fig. 8, in another embodiment, the elastic member 400 may be a closed ring provided with a notch 430 where the elastic member 400 is not completely broken. By providing the notch 430, the elastic member 400 can also contract and hold the pipe tightly as it moves outwardly with the pipe. Specifically, the elastic member 400 are provided with one or more notches 430 which are disposed with intervals. The elastic member 400 can be divided into a plurality of elastic pieces which are disposed with intervals by the notches, and the elastic pieces interact to achieve the function of holding the pipe tightly.

Preferably, an inner wall of the elastic member 400 is provided with a first engagement tooth 420 protruding toward the joint body 100, and a surface of the first engagement tooth 420 is provided with a second frustoconical guiding surface for guiding the insertion of the pipe. The friction between the elastic member 400 and the pipe can be increased by providing the first engagement tooth 420. Specifically, in a free state, a minimum inner diameter of the first engagement tooth 420 is smaller than a radial diameter of an outer wall of the pipe, so that the first engagement tooth 420 of the elastic member 400 can effectively abut against on the outer wall of the pipe after the pipe being inserted into the contraction cavity 120 and apply a certain holding force to the pipe. Meanwhile, when the pipe moves outward, the elastic member 400 can be effectively driven to move outward via the first engagement tooth 420, so that the elastic member 400 applies a greater holding force to the pipe, thereby preventing the pipe from being moved outward and pulled out.

In this embodiment, the number of the first engagement tooth 420 is preferably two, two first engagement tooth 420 are axially spaced apart by a predetermined distance to further increase the frictional force between the elastic member 400 and the pipe. Of course, in other embodiment, the number of the first engagement tooth 420 may be three, four, or others, as long as the friction force between the pipe and the elastic member 400 can be increased.

Specifically, in this embodiment, the elastic member 400 can be molded by an injection molding process from a plastic having higher hardness and better elasticity. Of course, in other embodiments, the elastic member 400 may be made of a metal material having better elasticity.

Referring to Fig. 9, the pipe joint structure 10 further includes an elastic claw ring 500, the elastic claw ring 500 is sleeved on the outside of the joint body 100, and the elastic claw ring 500 is disposed between the support seat 200 and the elastic member. The outward movement of the pipe is further limited by the elastic claw ring 500.

Specifically, the elastic claw ring 500 includes a ring body 510 and a plurality of second engagement teeth 520, the second engagement teeth 520 are arranged at inside of the ring body 510 with intervals, and the second engagement teeth 520 are extended obliquely from the contraction cavity 120 toward the accommodating cavity 110 to facilitate the insertion of the pipe. When assembling, firstly, engaging the first end of the support seat 200 with the joint body 100, and then sequentially sleeving the elastic claw ring 500, the elastic member 400 on the outside of the joint body 100, so that the elastic claw ring 500 is disposed between the elastic member 400 and the support seat 200.

Further, an inner diameter of the ring body 510 is larger than the outer diameter of the pipe. An free end of the second engagement teeth 520 away from the ring body 510 encloses an opening which has a smaller diameter than the outer diameter of the pipe, so that the second engagement teeth 520 can effectively abut against the outer wall of the pipe.

Referring to Figs. 1 to 4, an inner diameter of the second end of the support seat 200 is gradually increased in the direction in which the pipe is pulled out, so that the inner wall of the second end of the support seat 200 is provided with a flared inner conical surface 260. The elastic claw ring 500 abut against the end surface of the second end of the support seat 200. By providing the flared inner conical surface 260, not only a movable space is provided for the second engagement teeth 520 extending obliquely, but also the second engagement teeth 520 of the elastic claw ring 500 can be prevented from being excessively inclined toward the accommodating cavity 110 to cause yield broken.

Specifically, in this embodiment, the elastic claw ring 500 is made of a metal material having higher strength and better elasticity to prevent the elastic claw ring 500 from being broken due to insufficient strength and elasticity during the movement of the pipe. Of course, in other embodiments, the elastic claw ring 500 can also be made of other materials such as plastic having higher strength and better elasticity.

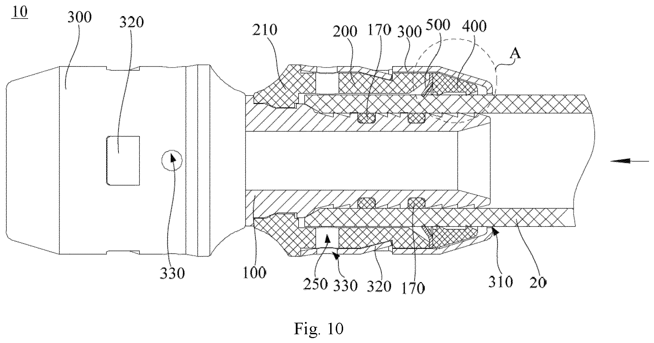

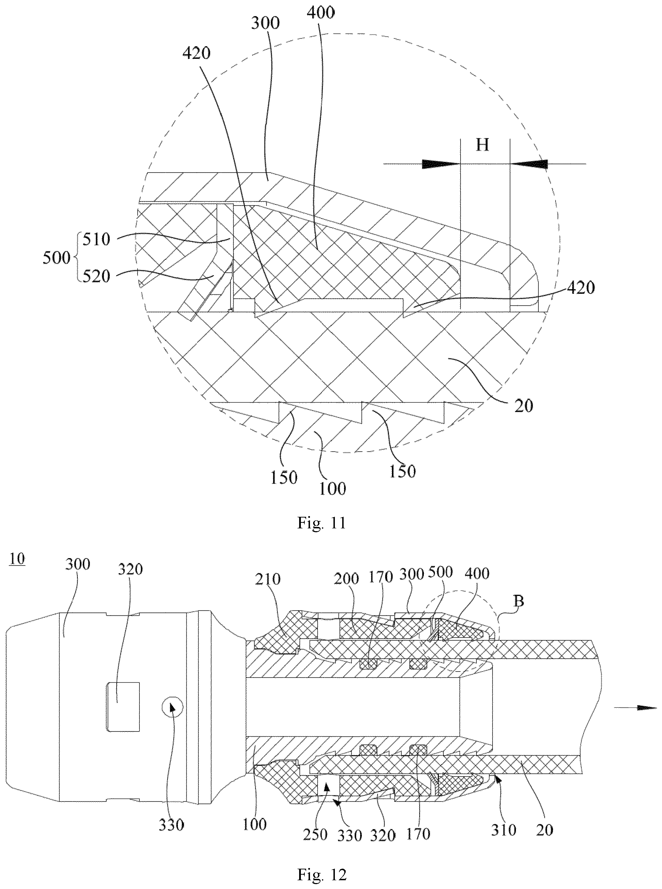

Referring to Figs. 10 and 11, when assembling the above pipe joint structure 10, sleeving the sealing ring 170 into the sealing ring slot 160, and then sleeving the support seat 200 on the j oint body 100, so that the engagement step 210 of the support seat 200 is locked in the fixing groove 140. Then, fitting the elastic claw ring 500, the elastic member 400 into the housing 300, and then, sleeving the elastic claw ring 500, the elastic member 400, and the housing 300 together on the joint body 100. Sliding the engagement plate 320 of the housing 300 into the engagement groove 220 through the guiding groove 240, so that the housing 300 is engaged with the support seat 200 and can be prevented from coming off. Of course, the engagement plate 320 can be stamped by a punching head, so that the engagement plate 320 is more firmly locked in the engagement groove 220.

When inserting the pipe 20 into the pipe joint structure 10, an end surface of the pipe 20 can be chamfered in advance, which facilitates the installation of the pipe 20. The pipe 20 is inserted into the contraction cavity 120 and the accommodating cavity 110 through the insertion opening 310. The operator observes through the first peephole 250 and the second peephole 330 to determine whether the pipe 20 is effectively inserted into the accommodating cavity 110 or not. The anti-off teeth 150 of the joint body 100, the first engagement tooth 420 of the elastic member 400, and the second engagement teeth 520 of the elastic claw ring 500 all apply a certain grip force to the pipe 20, thereby achieving better anti-off effectiveness and increasing the connection stability between the pipe 20 and pipe joint structure 10. Thus, the first end of the elastic member 400 abuts the elastic claw ring 500 on the end surface of the second end of the support seat 200, and there is a gap H in the axial direction between the contraction cavity 120 and an end surface of the second end of the elastic member 400.

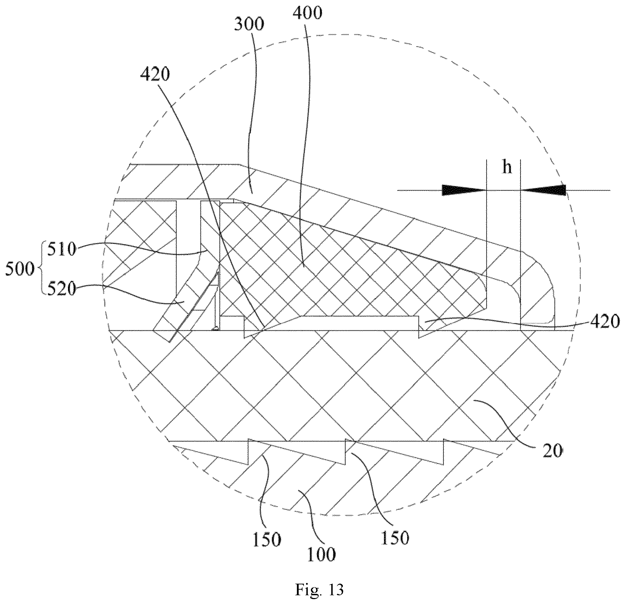

Referring to Figs. 12 and 13, when the pipe 20 is pulled along an axial direction of the pipe 20, under the action of the first engagement tooth 420, the pipe 20 will drive the elastic member 400 to move outward. Meanwhile, the pipe 20 will drive the elastic claw ring 500 to move outward through the second engagement teeth 520 when the pipe 20 is moved outwardly. Then, there is a gap h between the contraction cavity 120 and the end surface of the second end of the elastic member 400, where h is smaller than H. While the pipe 20 drives the elastic member 400 and the elastic claw ring 500 to move outward, based on the shape of the contraction cavity 120, the holding force applied to the pipe 20 by the elastic member 400 is gradually increased, thereby preventing the pipe 20 from continuing to move outward. Meanwhile, the second engagement teeth 520 of the elastic claw ring is gradually approached to the contraction cavity 120, so that the opening enclosed by the second engagement teeth 520 is getting smaller and smaller, and the grip force on the pipe 20 is getting bigger and bigger, thereby preventing the pipe 20 from continuing to move outward.

The above pipe joint structure 10 itself is simple to assemble, without a need to use any other assembly tools. Meanwhile, in use, it is only need to insert the pipe 20 into the insertion opening 310, without needing other locking connectors or any other installation tools.

### Second Embodiment

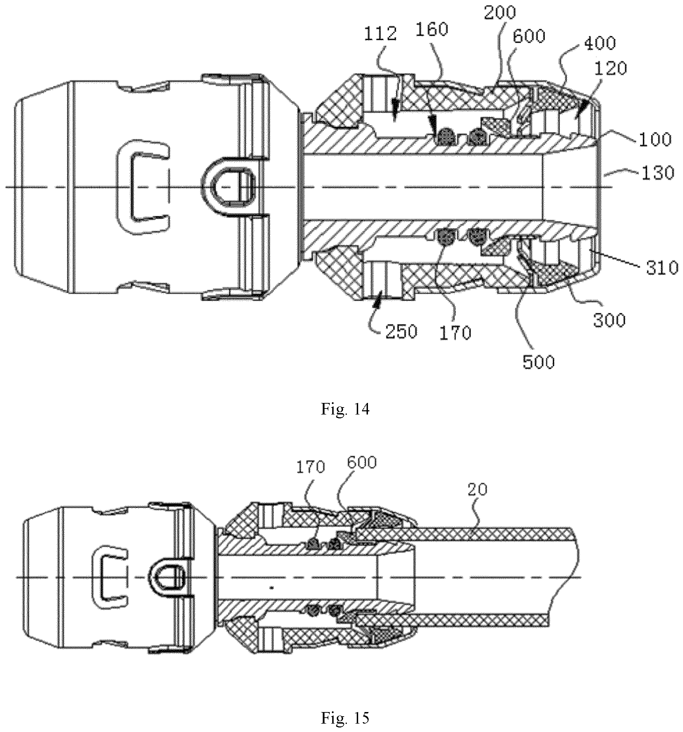

A pipe joint structure 10 according to a second embodiment of the present disclosure is shown in Figs. 14 to 22. The mainly different point between the pipe joint structure according to the present embodiment between the one according to the first embodiment is that a guiding ring 600 is provided in a receiving cavity defined between a housing assembly and a joint body. The different points between the present embodiment and the first embodiment will be mainly described below, and the same points between the present embodiment and the first embodiment will not be described in detail.

The pipe joint structure shown in Fig. 14 is used for engaging with the pipe 20, and includes the joint body 100, the housing assembly and the guiding ring 600. An outer wall of the j oint body is provided with a sealing ring slot 160, a sealing ring 170 is mounted in the sealing ring slot 160. The hosing assembly includes a plurality of components such as the support seat 200, the housing 300, the elastic member 400 and the elastic claw ring 500 as the same as the ones in the first embodiment. The relative positional relationship among the joint body 100, the support seat 200, the housing 300, the elastic member 400 and the elastic claw ring 500 may be substantially the same as or slightly different from the relative positional relationship among them described in the first embodiment, and details will not be described here again. Of course, the housing assembly may not include the elastic claw ring 500. In addition, in other embodiments, the housing assembly can be in other configurations.
a first end of the housing assembly is sleeved on the outside of the joint body 100, a second end of the housing assembly is separated from the joint body 100, and a receiving cavity (not labeled) is defined between an inner wall of the housing assembly and an outer wall of the joint body 10. Preferably, the first end of the housing assembly is engaged with the joint body 100, and an insertion opening 310 for inserting a pipe is defined between the joint body and the second end of the housing assembly. The guiding ring 600 is disposed inside the receiving cavity and is axially movable. The guiding ring 600 includes a ring portion 610 and an annular pressing portion 620, the ring portion 610 is sleeved on the outside of the joint body 100, the pressing portion 620 is disposed at an end of the ring portion 610 away from the insertion opening 310, and the pressing portion is adapted to abut against an end port of the pipe. Thus, when inserting the pipe 20 through the insertion opening 310, the pipe 20 is sleeved on an outside of the ring portion 610, and the end port of the pipe 20 abuts against the pressing portion 620, thereby pushing the guiding ring 600 to move together along an axial direction.

Referring to Figs. 14 to 16, when the pipe joint structure is engaged with the pipe 20, the end port of the pipe 20 does not need to be chamfered in advance, and the pipe 20 can be easily installed even if the end port of the pipe 20 is cut obliquely, thereby effectively protecting the sealing ring. Moreover, the pipe joint structure has advantages such as compact, safe and reliable, good sealing and low cost, effectively improveing product competitiveness.

Specifically, the receiving cavity is used for receiving pipe 20 to be inserted. The guiding ring 30 can be positioned at a location inside the receiving cavity and close to the insertion opening 310 when the pipe joint structure is not engaged with the pipe 20. After the pipe 20 is inserted into the receiving cavity through the insertion opening 310, the pipe 20 is sleeved on the outside of the ring portion 610 and abuts against the pressing portion 620. The pipe 20 pushes the guiding ring 600 to move together during the pipe 20 being inserted into a bottom of the receiving cavity, and the guiding ring 600 guides the insertion of the pipe 20. An end of the pipe 20 according to the present embodiment abuts against the pressing portion 620 during the insertion process, it would not directly contact the sealing ring 170 in the sealing ring slot 160, so that the guiding ring 600 can effectively protect the sealing ring 170. In this way, the end port of the pipe 20 can be installed without enduring special treatment, thus complicated installation tools such as a wrench, a pressing tong are not required for the installation process, the installation operation is convenient and efficient, and the production yield is improved.

Preferably, an overall wall thickness of the guiding ring 600 is not greater than an height of the receiving cavity, so that the insertion of the pipe 20 would not meet much difficulty due to too much resistance during the insertion process.

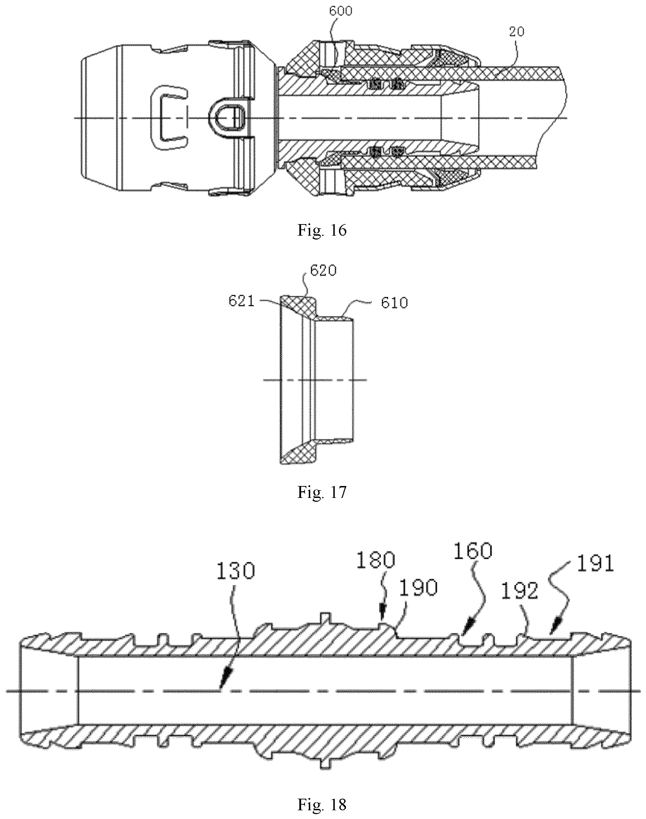

As shown in Fig. 17, the pressing portion 620 protrudes from an outer peripheral wall of the ring portion 610, and the ring portion 610 can be closely contact with an outer peripheral wall of the joint body 100. The sealing ring 170 in the sealing ring slot 160 will be in contact with the ring portion 610 during the process of inserting the pipe 20, and the ring portion 610 protects the sealing ring 160 from being crushed by the pipe 20 or pushed out from the sealing ring slot 160. The pressing portion 620 is configured to abut against an end of the pipe 20, the pipe pushes the pressing portion 620 and then drive the entire guiding ring 600 to move toward the bottom of the receiving cavity when the pipe 20 is pushed into the receiving cavity, and then finally complete the installation of the pipe 20.

Preferably, an inner diameter of the ring portion 610 is smaller than an outer diameter of the sealing ring170, and an outer diameter of the ring portion 610 is not greater than an inner diameter of the pipe 20. Preferably, an outer diameter of the pressing portion 620 is not greater than an outer diameter of the pipe 20, so that the guiding ring 600 can protect the sealing ring 170 without causing much resistance when being pushed into the receiving cavity by the pipe 20. When installing the pipe 20, the ring portion 610 is inserted into an inner hole of the pipe 20, even if an end surface of the pipe 20 is inclined or unflat due to the pipe cutting, the pipe 20 can be easily inserted into the bottom of the receiving cavity by the aid of the guiding ring 600 without damaging the sealing ring 170.

As shown in Figs 14, 17 and 18, in order to position an initial position of the guiding ring 600 and avoid too much resistance when pushing the guiding ring 600, the joint body 100 is provided with a first positioning groove 191 for engaging the guiding ring 600, and the first positioning groove 191 is disposed between an end of the joint body 100 and an adjacent sealing ring slot 160, in order to preliminary position of the guiding ring 600. A side wall 192 of the first positioning groove 191 away from the insertion opening 310 is in a frustoconical shape protruding obliquely upward, an inner wall of the pressing portion 620 is provided with an inclined guiding wall 621, and the inclined guiding wall 621 cooperates with the side wall 192, so that the guiding ring 600 can be quickly disengaged from the first positioning groove 191 along the inclined wall after being pushed by the pipe 20, and is smoothly pushed into the bottom of the receiving cavity.

As shown in Figs. 16 to 18, in order to position the guiding ring 600 after the guiding ring 600 being pushed into the bottom of the receiving cavity by the pipe 20, an outer wall of the joint body 100 corresponding to the bottom of the receiving cavity is provided with a stop portion 180 to cooperate with the inclined guiding wall 621. Specifically, the stop portion 180 is a convex structure, and a side wall of the stop portion 180 close to the insertion opening 310 is an inclined wall 190 to cooperate with the inclined guiding wall 621. The bottom of the receiving cavity is opposite to the insertion opening 310.

The housing assembly is provided with a peephole 250 for viewing a mating position of the pipe 20. The peephole 250 is close to the bottom of the receiving cavity. Specifically, the peephole 250 can face the stop portion 180 to directly view whether the pipe 20 is inserted into place or not.

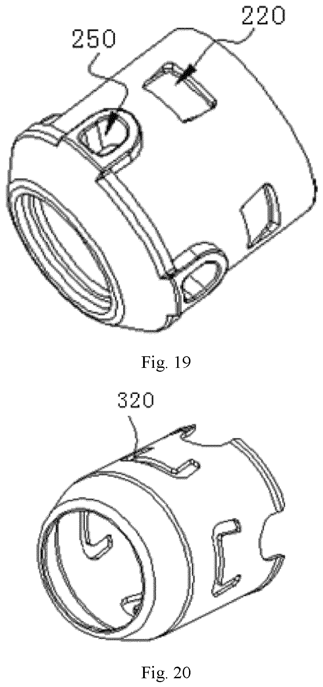

Figs. 19 and 20 illustrate the structures of the support seat 200 and housing 300 in the housing assembly, which are not completely identical to the structures of the support seat 200 and housing 300 according to the first embodiment. The main difference points are that in this embodiment, only the support seat 200 is provided with the peephole 250, and the housing 300 is provided with an recess which corresponds to the peephole 250 so as not to affect the observation from the peephole 250. It can be understood that, in this embodiment, the housing assembly is sleeved on the outside of the joint body 100 through the first end of the support seat 200, and the accommodating cavity 112 defined by the joint body 100 and an inner wall of the support seat 200 is a portion of the receiving cavity. The contraction cavity 120 is defined between the inner wall of the housing 300 and the outer wall of the joint body 100, and the contraction cavity 120 partially overlaps with the receiving cavity. The insertion opening 310 for inserting the pipe 20 is defined between the joint body 100 and the second end of the housing 300.

Further, the structures of the elastic member 400 and the elastic claw ring 500 may be substantially the same as or similar to the structures of the elastic member 400 and the elastic claw ring 500 in the first embodiment described above.

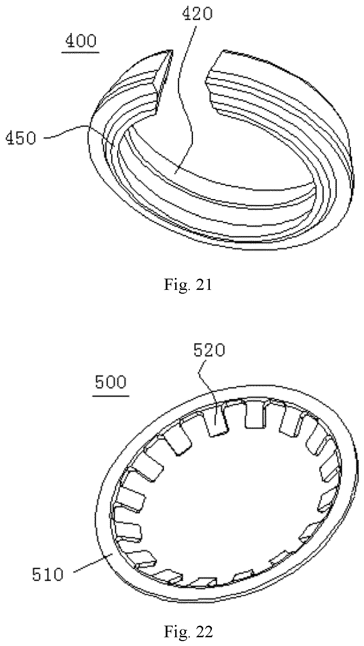

Fig. 22 illustrates the structure of the elastic claw ring 500 in detail in this embodiment, the structure of the elastic claw ring 500 is substantially the same as the elastic claw ring 500 in the first embodiment described above. Specifically, the elastic claw ring 500 includes a ring body 510 and a plurality of second engaging teeth 520, the second engagement teeth 520 are arranged at inside of the ring body 510 with intervals, and the second engagement teeth 520 are extended obliquely from the contraction cavity 120 toward the accommodating cavity 110 to facilitate the insertion of the pipe.

Fig. 21 illustrates the structure of the elastic member 400 in detail in this embodiment, it is not completely the same as the elastic member 400 in the first embodiment, and the mainly difference points are that an end of the elastic member 400 close to the elastic claw ring 500 is provided with inclined teeth 450 protruding outward from an end surface, the inclined teeth 450 can mate with the second engagement teeth 520 to increase the rigidly of the second teeth 520 to bear more tension force.

In this embodiment, specifically, the joint body 100 is a through joint, and two ends of the joint body 100 is both provided with the housing assembly and the guiding ring 600 to achieve engaging with two pipe 20. Of course, in another embodiment, the joint body 100 can be configured to an elbow joint, a three-way joint or other types of joints , and the number of the housing assembly and the number of the guiding ring 60 correspond to the number of an end port of the joint body 100.

## Claims

1. A pipe joint structure (10), comprising:
a joint body (100);
a support seat (200), wherein a first end of the support seat (200) is sleeved on outside of the joint body (100), a second end of the support seat (200) is disposed to be separated from the joint body (100), and an accommodating cavity (110) is defined between an inner wall of the support seat (200) and an outer wall of the joint body (100);
a housing (300), wherein a first end of the housing (300) is sleeved on outside of the support seat (200) and engaged with the support seat (200), a second end of the housing (300) is disposed beyond the second end of the support seat (200), so that a contraction cavity (120) is defined between an inner wall of the housing (300) and the outer wall of the joint body (100); an insertion opening (310) through which a pipe can be inserted is defined between the joint body (100) and the second end of the housing (300), the insertion opening (310) communicates with the accommodating cavity (110) via the contraction cavity (120), an end of the contraction cavity (120) close to the insertion opening (310) is a small opening end, and the other end of the contraction cavity (120) away from the insertion opening (310) is a large opening end; and
an elastic member (400), wherein the elastic member (400) is sleeved on the outside of the joint body (100) and disposed in the contraction cavity (120); a passage through which the pipe can pass is defined between the elastic member (400) and the joint body (100); **characterized in that**
an outer wall of the support seat (200) is provided with a plurality of engagement grooves (220) and guiding grooves (240), the engagement grooves (220) are spaced apart along a circumferential direction of the support seat (200), the guiding grooves (240) communicates with the engagement grooves (220) respectively, and a side of each of the guiding grooves (240) away from each of the engagement grooves (220) penetrates through an end surface of the second end of the support seat (200);
a wall of the housing (300) is provided with a plurality of engagement plates (320), and the engagement plates (320) are capable of engaging with the engagement grooves (220) through the guiding grooves (240).

2. The pipe joint structure according to claim 1, wherein a circumferential span of the guiding groove (240) gradually increases in a direction in which the pipe can be pulled out; and/or, a radial depth of the engagement groove (220) gradually increases in the direction in which the pipe can be pulled out.

3. The pipe joint structure according to claim 1, wherein the support seat (200) is provided with a first peephole (250) which communicates with the accommodating cavity (110); the first peephole (250) is disposed between the engagement groove (220) and the first end of the support seat (200); the housing (300) is provided with a second peephole (330) which communicates with the first peephole (250).

4. The pipe joint structure according to any one of claims 1-3, wherein the first end of the support seat (200) is provided with an engagement step (210), the joint body (100) is provided with a fixing groove (140), and the engagement step (210) is locked in the fixing groove (140).

5. The pipe joint structure according to claim 4, wherein the joint body (100) is provided with a first convex ring (141) and a second convex ring (142) spaced apart from the first convex ring (141), the second convex ring (142) is further away from the elastic member (400) than the first convex ring (141); the first convex ring (141), the second convex ring (142) and the joint body (100) together define the fixing groove (140), and an outer wall of the first convex ring (141) is provided with a first frustoconical guiding surface to facilitate the insertion of the support seat (200).

6. The pipe joint structure according to any one of claims 1-3, wherein an outer wall of the elastic member (400) is provided with a frustoconical surface; the elastic member (400) is an annular member with a gap (410), and an axial length of the elastic member (400) is smaller than an axial length of the contraction cavity (120); and/or, wherein an inner wall of the elastic member (400) is provided with a first engagement tooth (420), and a surface of the first engagement tooth (420) is provided with a second frustoconical guiding surface to facilitate the insertion of the pipe.

7. The pipe joint structure according to claim 5, wherein the outer wall of the joint body (100) is provided with a plurality of anti-off teeth (150), the anti-off teeth (150) are sequentially arranged between an end of the joint body (100) and the first convex ring (141) adjacent thereto along an axial direction; and/or, wherein the outer wall of the joint body (100) is provided with at least one sealing ring slot (160), the sealing ring slot (160) is disposed between an end of the joint body (100) and the first convex ring (141) adjacent thereto.

8. The pipe joint structure according to any one of claims 1-3, wherein the pipe joint structure further comprises an elastic claw ring (500), the elastic claw ring (500) is sleeved on the outside of the joint body (100) and disposed between the support seat (200) and the elastic member (400), wherein the elastic claw ring (500) comprises a ring body (510) and a plurality of second engagement teeth (520), the second engagement teeth (520) are arranged at inside of the ring body (510) with intervals, and the second engagement teeth (520) extend obliquely from the contraction cavity (120) toward the accommodating cavity (110); and an inner wall of the second end of the support seat (200) is provided with a flared inner conical surface.

9. The pipe j oint structure according to claim 1, wherein the outer wall of the joint body (100) is provided with a sealing ring slot (160);
the pipe joint structure comprises a housing assembly comprising the support seat (200), the housing (300), and the elastic member (400), a receiving cavity is defined between an inner wall of the housing assembly and the outer wall of the joint body (100), the accommodating cavity (110) is a portion of the receiving cavity, and the contraction cavity (120) partially overlaps with the receiving cavity;
the pipe joint structure further comprises a guiding ring (600) axially movable in the receiving cavity, wherein the guiding ring (600) includes a ring portion (610) and an annular pressing portion (620), the ring portion (610) is sleeved on the outside of the joint body (100), the pressing portion (620) is disposed at an end of the ring portion (610) away from the insertion opening (310), and the pressing portion (620) is adapted to abut against an end port of the pipe.

10. The pipe joint structure according to claim 9, wherein a sealing ring (170) is mounted in the sealing ring slot (160), an inner diameter of the ring portion (610) is smaller than an outer diameter of the sealing ring (170); and an outer diameter of the ring portion (610) is not greater than an inner diameter of the pipe; and/or, wherein an outer diameter of the pressing portion (620) is not greater than an outer diameter of the pipe, and an inner wall of the pressing portion (620) is provided with an inclined guiding wall (621).

11. The pipe joint structure according to claim 10, wherein the joint body (100) is provided with a first positioning groove (191) for engaging the guiding ring (600), the first positioning groove (191) is disposed between the sealing ring slot (160) and an end of the joint body (100), and a side wall (192) of the first positioning groove (191) away from the insertion opening (310) is in a frustoconical shape for matching the inclined guiding wall, and/or, an outer wall of the joint body (100) corresponding to a bottom of the receiving cavity is provided with a stop portion (180) for cooperating with the inclined guiding wall.

12. The pipe joint structure according to claim 9, wherein the housing assembly is provided with a peephole (250) for observing a mating position of the pipe.

## Patentansprüche

1. Rohrverbindungsstruktur (10) umfassend:
einen Verbindungskörper (100);
einen Stützsitz (200), worin ein erstes Ende des Stützsitzes (200) am Außenteil des Verbindungskörpers (100) aufgeschoben ist, ein zweites Ende des Stützsitzes (200) angeordnet ist, um vom Verbindungskörper (100) getrennt zu werden, und ein Beherbergungshohlraum (110) zwischen einer Innenwand des Stützsitzes (200) und einer Außenwand des Verbindungskörpers (100) definiert ist;
ein Gehäuse (300), worin ein erstes Ende des Gehäuses (300) am Außenteil des Stützsitzes (200) aufgeschoben ist und mit dem Stützsitz (200) eingreift, ein zweites Ende des Gehäuses (300) jenseits des zweiten Endes des Stützsitzes (200) angeordnet ist, so dass ein Kontraktionshohlraum (120) zwischen einer Innenwand des Gehäuses (300) und der Außenwand des Verbindungskörpers (100) definiert ist; eine Einfügungsöffnung (310), durch welche ein Rohr eingefügt werden kann, zwischen dem Verbindungskörper (100) und dem zweiten Ende des Gehäuses (300) definiert ist, die Einfügungsöffnung (310) mit dem Beherbergungshohlraum (110) über den Kontraktionshohlraum (120) kommuniziert, ein Ende des Kontraktionshohlraums (120), das der Einfügungsöffnung (310) nahe liegt, ein kleines Öffnungsende ist, und das andere Ende des Kontraktionshohlraums (120), das von der Einfügungsöffnung (310) abgewandt ist, ein großes Öffnungsende ist; und
ein elastisches Element (400), worin das elastische Element (400) am Außenteil des Verbindungskörpers (100) aufgeschoben und in dem Kontraktionshohlraum (120) angeordnet ist; ein Durchgang, durch welchen das Rohr durchlaufen kann, zwischen dem elastischen Element (400) und dem Verbindungskörper (100) definiert ist; **dadurch gekennzeichnet, dass**
eine Außenwand des Stützsitzes (200) mit einer Vielzahl von Eingriffsnuten (220) und Führungsnuten (240) versehen ist, wobei die Eingriffsnuten (220) entlang einer Umfangsrichtung des Stützsitzes (200) beabstandet sind, die Führungsnuten (240) jeweils mit den Eingriffsnuten (220) kommunizieren, und eine Seite von jeder der Führungsnuten (240), die von jeder der Eingriffsnuten (220) abgewandt ist, durch eine Endfläche des zweiten Endes des Stützsitzes (200) dringt;
eine Wand des Gehäuses (300) mit einer Vielzahl von Eingriffsplatten (320) versehen ist, und die Eingriffsplatten (320) in die Eingriffsnuten (220) durch die Führungsnuten (240) eingreifen können.

2. Rohrverbindungsstruktur nach Anspruch 1, worin eine Umfangsspanne der Führungsnut (240) in einer Richtung allmählich zunimmt, in der das Rohr ausgezogen werden kann; und/oder eine radiale Tiefe der Eingriffsnut (220) in der Richtung allmählich zunimmt, in der das Rohr ausgezogen werden kann.

3. Rohrverbindungsstruktur nach Anspruch 1, worin der Stützsitz (200) mit einem ersten Schauloch (250) versehen ist, das mit dem Beherbergungshohlraum (110) kommuniziert; das erste Schauloch (250) zwischen der Eingriffsnut (220) und dem ersten Ende des Stützsitzes (200) angeordnet ist; das Gehäuse (300) mit einem zweiten Schauloch (330) versehen ist, das mit dem ersten Schauloch (250) kommuniziert.

4. Rohrverbindungsstruktur nach einem der Ansprüche 1-3, worin das erste Ende des Stützsitzes (200) mit einer Eingriffsstufe (210) versehen ist, der Verbindungskörper (100) mit einer Fixiernut (140) versehen ist, und die Eingriffsstufe (210) in der Fixiernut (140) arretiert ist.

5. Rohrverbindungsstruktur nach Anspruch 4, worin der Verbindungskörper (100) mit einem ersten konvexen Ring (141) und einem zweiten konvexen Ring (142) versehen ist, der vom ersten konvexen Ring (141) beabstandet ist, wobei der zweite konvexe Ring (142) vom elastischen Element (400) weiter entfernt liegt als der erste konvexe Ring (141); der erste konvexe Ring (141), der zweite konvexe Ring (142) und der Verbindungskörper (100) zusammen die Fixiernut (140) definieren, und eine Außenwand des ersten konvexen Rings (141) mit einer ersten kegelstumpfförmigen Führungsfläche versehen ist, um die Einfügung des Stützsitzes (200) zu erleichtern.

6. Rohrverbindungsstruktur nach einem der Ansprüche 1-3, worin eine Außenwand des elastischen Elementes (400) mit einer kegelstumpfförmigen Fläche versehen ist; das elastische Element (400) ein ringförmiges Element mit einem Spalt (410) ist, und eine axiale Länge des elastischen Elementes (400) kleiner ist als eine axiale Länge des Kontraktionshohlraums (120); und/oder, worin eine Innenwand des elastischen Elementes (400) mit einem ersten Eingriffszahn (420) versehen ist, und eine Fläche des ersten Eingriffszahns (420) mit einer zweiten kegelstumpfförmigen Führungsfläche versehen ist, um die Einfügung des Rohres zu erleichtern.

7. Rohrverbindungsstruktur nach Anspruch 5, worin die Außenwand des Verbindungskörpers (100) mit einer Vielzahl von Anti-Ausziehzähnen (150) versehen ist, die Anti-Ausziehzähne (150) sequentiell zwischen einem Ende des Verbindungskörpers (100) und dem ersten konvexen Ring (141) angeordnet sind, der entlang einer axialen Richtung daran angrenzend ist; und/oder worin die Außenwand des Verbindungskörpers (100) mit zumindest einem Abdichtungsringschlitz (160) versehen ist, der Abdichtungsringschlitz (160) zwischen einem Ende des Verbindungskörpers (100) und dem ersten konvexen Ring (141) angeordnet ist, der daran angrenzend ist.

8. Rohrverbindungsstruktur nach einem der Ansprüche 1-3, worin die Rohrverbindungsstruktur ferner einen elastischen Klauenring (500) umfasst, der elastische Klauenring (500) am Außenteil des Verbindungskörpers (100) aufgeschoben ist und zwischen dem Stützsitz (200) und dem elastischen Element (400) angeordnet ist, worin der elastische Klauenring (500) einen Ringkörper (510) und eine Vielzahl von zweiten Eingriffszähnen (520) umfasst, die zweiten Eingriffszähne (520) am Innenteil des Ringkörpers (510) in Abständen angeordnet sind, und die zweiten Eingriffszähne (520) sich schräg vom Kontraktionshohlraum (120) zum Beherbergungshohlraum (110) hin erstrecken; und eine Innenwand des zweiten Endes des Stützsitzes (200) mit einer aufgeweiteten inneren konischen Fläche versehen ist.

9. Rohrverbindungsstruktur nach Anspruch 1, worin die Außenwand des Verbindungskörpers (100) mit einem Abdichtungsringschlitz (160) versehen ist;
die Rohrverbindungsstruktur eine Gehäuseanordnung umfasst, die den Stützsitz (200), das Gehäuse (300) und das elastische Element (400) umfasst, ein Aufnahmehohlraum zwischen einer Innenwand der Gehäuseanordnung und der Außenwand des Verbindungskörpers (100) definiert ist, der Beherbergungshohlraum (110) ein Abschnitt des Aufnahmehohlraums ist, und der Kontraktionshohlraum (120) sich mit dem Aufnahmehohlraum teilweise überlappt;
die Rohrverbindungsstruktur ferner einen Führungsring (600) umfasst, der im Aufnahmehohlraum axial beweglich ist, worin der Führungsring (600) einen Ringabschnitt (610) und einen ringförmigen Andruckabschnitt (620) umfasst, der Ringabschnitt (610) am Außenteil des Verbindungskörpers (100) aufgeschoben ist, der Andruckabschnitt (620) an einem Ende des Ringabschnittes (610) angeordnet ist, das von der Einfügungsöffnung (310) abgewandt ist, und der Andruckabschnitt (620) dafür geeignet ist, um gegen einen Endanschluss des Rohres anzuliegen.

10. Rohrverbindungsstruktur nach Anspruch 9, worin ein Abdichtungsring (170) im Abdichtungsringschlitz (160) montiert ist, ein Innendurchmesser des Ringabschnittes (610) kleiner ist als ein Außendurchmesser des Abdichtungsringes (170); und ein Außendurchmesser des Ringabschnittes (610) nicht größer ist als ein Innendurchmesser des Rohres; und/oder worin ein Außendurchmesser des Andruckabschnittes (620) nicht größer ist als ein Außendurchmesser des Rohres, und eine Innenwand des Andruckabschnittes (620) mit einer geneigten Führungswand (621) versehen ist.

11. Rohrverbindungsstruktur nach Anspruch 10, worin der Verbindungskörper (100) mit einer ersten Positioniernut (191) zum Eingreifen des Führungsringes (600) versehen ist, die erste Positioniernut (191) zwischen dem Abdichtungsringschlitz (160) und ein Ende des Verbindungskörpers (100) angeordnet ist, und eine Seitenwand (192) der ersten Positioniernut (191), die von der Einfügungsöffnung (310) abgewandt ist, in einer Kegelstumpfform ist, um zur geneigten Führungswand zu passen; und/oder eine Außenwand des Verbindungskörpers (100), die einem Boden des Aufnahmehohlraums entspricht, mit einem Anschlagabschnitt (180) zum Zusammenwirken mit der geneigten Führungswand versehen ist.

12. Rohrverbindungsstruktur nach Anspruch 9, worin die Gehäuseanordnung mit einem Schauloch (250) zum Beobachten einer zusammenpassenden Stellung des Rohres versehen ist.

## Revendications

1. Structure de raccordement de tuyau (10), comprenant :
un corps de raccordement (100) ;
un siège de support (200), dans lequel une première extrémité du siège de support (200) est emmanchée à l'extérieur du corps de raccordement (100), une seconde extrémité du siège de support (200) est disposée pour être séparée du corps de raccordement (100), et une cavité de logement (110) est définie entre une paroi interne du siège de support (200) et une paroi externe du corps de raccordement (100) ; ^{iv}
un boîtier (300), dans lequel une première extrémité du boîtier (300) est emmanchée à l'extérieur du siège de support (200) et mis en prise avec le siège de support (200), une seconde extrémité du boîtier (300) est disposée au-delà de la seconde extrémité du siège de support (200), de façon à ce qu'une cavité de contraction (120) soit définie entre une paroi interne du boîtier (300) et la paroi externe du corps de raccordement (100) ; une ouverture d'insertion (310) à travers laquelle un tuyau peut être inséré est définie entre le corps de raccordement (100) et la seconde extrémité du boîtier (300), l'ouverture d'insertion (310) communique avec la cavité de logement (110) par la cavité de contraction (120), une extrémité de la cavité de contraction (120) proche de l'ouverture d'insertion (310) est une petite extrémité d'ouverture, et l'autre extrémité de la cavité de contraction (120) éloignée de l'ouverture d'insertion (310) est une grande extrémité d'ouverture ; et
un élément élastique (400), dans laquelle l'élément élastique (400) est emmanché à l'extérieur du corps de raccordement (100) et disposé dans la cavité de contraction (120) ; un passage à travers lequel le tuyau peut passer est défini entre l'élément élastique (400) et le corps de raccordement (100) ; **caractérisée en ce que**
une paroi externe du siège de support (200) est pourvue d'une pluralité de rainures de mise en prise (220) et de rainures de guidage (240), les rainures de mise en prise (220) sont espacées le long d'une direction circonférentielle du siège de support (200), les rainures de guidage (240) communiquent, respectivement, avec les rainures de mise en prise (220), et un côté de chacune des rainures de guidage (240) éloignées de chacune des rainures de mise en prise (220) pénètre à travers une surface d'extrémité de la seconde extrémité du siège de support (200) ;
une paroi du boîtier (300) est pourvue d'une pluralité de plaques de mise en prise (320), et les plaques de mise en prise (320) peuvent venir en prise avec les rainures de mise en prise (220) à travers les rainures de guidage (240).

2. Structure de raccordement de tuyau selon la revendication 1, dans laquelle une étendue circonférentielle de la rainure de guidage (240) augmente progressivement dans une direction dans laquelle le tuyau peut être retiré ; et/ou, une profondeur radiale de la rainure de mise en prise (220) augmente progressivement dans la direction dans laquelle le tuyau peut être retiré.

3. Structure de raccordement de tuyau selon la revendication 1, dans laquelle le siège de support (200) est pourvu d'un premier orifice (250) qui communique avec la cavité de logement (110) ; le premier orifice (250) est disposé entre la rainure de mise en prise (220) et la première extrémité du siège de support (200) ; le boîtier (300) est pourvu d'un second orifice (330) qui communique avec le premier orifice (250).

4. Structure de raccordement de tuyau selon l'une quelconque des revendications 1 à 3, dans laquelle la première extrémité du siège de support (200) est pourvue d'un gradin de mise en prise (210), le corps de raccordement (100) est pourvu d'une rainure de fixation (140), et le gradin de mise en prise (210) est verrouillé dans la rainure de fixation (140).

5. Structure de raccordement de tuyau selon la revendication 4, dans laquelle le corps de raccordement (100) est pourvu d'une première bague convexe (141) et d'une seconde bague convexe (142) espacée de la première bague convexe (141), la seconde bague convexe (142) est plus éloignée de l'élément élastique (400) que la première bague convexe (141) ; la première bague convexe (141), la seconde bague convexe (142) et le corps de raccordement (100) définissent ensemble la rainure de fixation (140), et une paroi externe de la première bague convexe (141) est pourvue d'une première surface de guidage tronconique pour faciliter l'insertion du siège de support (200).

6. Structure de raccordement de tuyau selon l'une quelconque des revendications 1 à 3, dans laquelle une paroi externe de l'élément élastique (400) est pourvue d'une surface tronconique ; l'élément élastique (400) est un élément annulaire avec un espace (410), et une longueur axiale de l'élément élastique (400) est inférieure à une longueur axiale de la cavité de contraction (120) ; et/ou, dans laquelle une paroi interne de l'élément élastique (400) est pourvue d'une première dent de mise en prise (420), et une surface de la première dent de mise en prise (420) est pourvue d'une seconde surface de guidage tronconique pour faciliter l'insertion du tuyau.

7. Structure de raccordement de tuyau selon la revendication 5, dans laquelle la paroi externe du corps de raccordement (100) est pourvue d'une pluralité de dents anti-détachement (150), les dents anti-détachement (150) sont agencées séquentiellement entre une extrémité du corps de raccordement (100) et la première bague convexe (141) adjacente à celle-ci le long d'une direction axiale ; et/ou, dans laquelle la paroi externe du corps de raccordement (100) est pourvue d'au moins une fente de bague d'étanchéité (160), la fente de bague d'étanchéité (160) est disposée entre une extrémité du corps de raccordement (100) et la première bague convexe (141) adjacente à celle-ci.

8. Structure de raccordement de tuyau selon l'une quelconque des revendications 1 à 3, dans laquelle la structure de raccordement de tuyau comprend en outre une bague de griffe élastique (500), la bague de griffe élastique (500) est emmanchée à l'extérieur du corps de raccordement (100) et disposée entre le siège de support (200) et l'élément élastique (400), dans laquelle la bague de griffe élastique (500) comprend un corps de bague (510) et une pluralité de secondes dents de mise en prise (520), les secondes dents de mise en prise (520) sont agencées à l'intérieur du corps de bague (510) à des intervalles, et les secondes dents de mise en prise (520) s'étendent obliquement depuis la cavité de contraction (120) vers la cavité de logement (110) ; et une paroi interne de la seconde extrémité du siège de support (200) est pourvue d'une surface conique interne évasée.

9. Structure de raccordement de tuyau selon la revendication 1, dans laquelle la paroi externe du corps de raccordement (100) est pourvue d'une fente de bague d'étanchéité (160) ;
la structure de raccordement de tuyau comprend un ensemble de boîtier comprenant le siège de support (200), le boîtier (300) et l'élément élastique (400), une cavité de logement est définie entre une paroi interne de l'ensemble de boîtier et la paroi externe du corps de raccordement (100), la cavité de logement (110) est une partie de la cavité de réception, et la cavité de contraction (120) chevauche partiellement la cavité de réception ;
la structure de raccordement de tuyau comprend en outre une bague de guidage (600) mobile axialement dans la cavité de réception, dans laquelle la bague de guidage (600) comprend une partie de bague (610) et une partie de pression annulaire (620), la partie de bague (610) est emmanchée à l'extérieur du corps de raccordement (100), la partie de pression (620) est disposée à une extrémité de la partie de bague (610) éloignée de l'ouverture d'insertion (310), et la partie de pression (620) est adaptée pour venir en butée contre une sortie d'extrémité du tuyau.

10. Structure de raccordement de tuyau selon la revendication 9, dans laquelle une bague d'étanchéité (170) est montée dans la fente de bague d'étanchéité (160), un diamètre interne de la partie de bague (610) est inférieur à un diamètre externe de la bague d'étanchéité (170) ; et un diamètre externe de la partie de bague (610) n'est pas supérieur à un diamètre interne du tuyau ; et/ou, dans laquelle un diamètre externe de la partie de pression (620) n'est pas supérieur à un diamètre externe du tuyau, et une paroi interne de la partie de pression (620) est pourvue d'une paroi de guidage inclinée (621).

11. Structure de raccordement de tuyau selon la revendication 10, dans laquelle le corps de raccordement (100) est pourvu d'une première rainure de positionnement (191) pour venir en prise avec la bague de guidage (600), la première rainure de positionnement (191) est disposée entre la fente de bague d'étanchéité (160) et une extrémité du corps de raccordement (100), et une paroi latérale (192) de la première rainure de positionnement (191) éloignée de l'ouverture d'insertion (310) est en forme tronconique pour s'adapter à la paroi de guidage inclinée, et/ou, une paroi externe du corps de raccordement (100) correspondant à un fond de la cavité de réception est pourvue d'une partie d'arrêt (180) pour coopérer avec la paroi de guidage inclinée.

12. Structure de raccordement de tuyau selon la revendication 9, dans laquelle l'ensemble de boîtier est pourvu d'un orifice (250) pour observer une position d'accouplement du tuyau.
